# EUROPÄISCHE PATENTSCHRIFT

(11) **EP 0 417 525 B1**
(45) Veröffentlichungstag und Bekanntmachung des Hinweises auf die Patenterteilung: **22.05.1996**
(21) Anmeldenummer: 90116178.6
(22) Anmeldetag: 23.08.1990
(51) Int. Cl.: B01D 69/10, B01D 67/00, B01D 61/00

(54) **Textilverstärkter Membranfilter, Verfahren zu seiner Herstellung und seine Verwendung**
Membrane filter reinforced with textile material, process for its manufacture and use thereof
Membrane filtrante renforcée par une matière textile, son procédé de fabrication et son utilisation

(30) Priorität: 31.08.1989 DE 3928934
(43) Veröffentlichungstag der Anmeldung: 20.03.1991
(73) Patentinhaber: SARTORIUS AG, D-37075 Göttingen (DE)
(72) Erfinder: Klüver, Horst, Dr., D-3402 Dransfeld (DE); Nussbaumer, Dietmar, Dr., D-3400 Göttingen (DE); Wünn, Eberhard, D-3400 Göttingen-Roringen (DE)
(74) Vertreter: Müller-Boré & Partner Patentanwälte

(56) Entgegenhaltungen:
- EP-A- 0 077 691
- EP-A- 0 082 393
- EP-A- 0 245 863
- WO-A-88/05686
- DE-A- 2 453 128
- DE-A- 2 622 814
- DE-A- 3 240 143
- GB-A- 912 278
- US-A- 2 944 017
- US-A- 4 340 479
- US-A- 4 346 126

## Beschreibung

Die Erfindung betrifft insbesondere nach Fällbadverfahren erhaltene textilverstärkte Membranfilter, ein Verfahren zu ihrer Herstellung sowie ihre Verwendung, insbesondere als Bahnware, beispielsweise zum Einbau in Filterkerzen und Wickelmodule, sowie als Flachfilter, insbesondere zum Einbau in Gehäuse bzw. Module für die statische Filtration und die Querstromfiltration.

Aus einer Vielzahl von synthetischen Polymermaterialien lassen sich insbesondere nach dem Fällbadverfahren mikro- und ultraporöse Membranfilter mit symmetrischer oder asymmetrischer Porenstruktur herstellen. Die Membranfilter sind je nach Herstellungsbedingung und eingesetztem Polymermaterial hydrophil (ohne Tensidzusatz wasserbenetzbar) oder hydrophob (nicht wasserbenetzbar). Von besonderem Interesse sind hydrophile Membranfilter aus aliphatischen Polyamiden, z.B. PA 6.6 und PA 6 (vgl. beispielsweise die US-A-3 876 738, die US-A-4 340 479 und die DE-A-30 28 213), da sie eine hohe Chemikalien- und Temperaturbeständigkeit besitzen. Hervorzuheben ist ebenfalls die toxikologische Unbedenklichkeit der die aliphatischen Polyamide aufbauenden Verbindungen.

Die Herstellung dieser Membranen in technischem Maßstabe erfolgt im allgemeinen in der Weise, daß eine Lösung des membranbildenden Materials, beispielsweise eine Lösung eines Polyamids in Ameisensäure, die gegebenenfalls eine bestimmte Menge eines Nichtlösungsmittels für das Polymere enthalten kann, hergestellt wird, worauf die erhaltene Gießlösung in Form eines endlosen Films auf eine Unterlage, häufig auf eine sich drehende Trommel, aufgebracht und in ein Fällungsbad eingeleitet wird, in welchem das gelöste Polymere unter Bildung eines Membranfilters ausgefällt wird, worauf das erhaltene Membranfilter in Form einer endlosen Bahn aus dem Bad abgezogen, gewaschen und getrocknet wird.

Das Fällbad kann eine bestimmte Menge desselben Lösungsmittels enthalten, das zur Herstellung der Gießlösung verwendet wird. Im allgemeinen unterscheidet sich das zur Herstellung der Gießlösung verwendete Lösungsmittelsystem von dem Fällbadsystem nur darin, daß das Fällbad mehr Nichtlösungsmittel als das Lösungsmittelsystem für die Herstellung der Gießlösung enthält, um die Ausfällung des Membranfilters zu bewirken.

Die Membranfilter, die im allgemeinen Dicken zwischen ungefähr 60 µm und 200 µm besitzen, werden im allgemeinen für ihren Einsatzzweck, beispielsweise zum Einbau in Filterkerzen, durch Schneiden, Rollen, Plissieren etc. verarbeitet. Nachteilig für diese Verarbeitung ist dabei ihre mangelnde mechanische Festigkeit. Beim Gebrauch können die Membranfilter ferner beispielsweise beim Benetzen mit gebräuchlichen Lösungsmitteln, wie Wasser oder Alkoholen, quellen.

Aus diesem Grund ist es bekannt, Membranfilter mit mechanisch festen offenmaschigen textilen Verstärkungsmaterialien, die in die poröse Membranfiltermatrix eingebettet sind, zu verstärken. Als textile Verstärkungsmaterialien werden insbesondere Vliese, wie Spinn- oder Stapelfaservliese, ggf. auch Gewebe und Gewirke verwendet. Ferner kann man perforierte Folien (Streckfolien) verwenden. Als textile Verstärkungen für Membranen aus PA 6 und PA 6.6 werden Polyester, wie Polyethylenterephthalat, und Polyolefine, wie Polypropylene, in der Praxis verwendet. Ferner gibt es Literatur, welche den Einsatz von Fasern aus Polyimiden und aromatischen Polyamiden (Aramiden), Zellulose, wie Papier, und regenerierter Zellulose, Zelluloseestern und Zelluloseethern sowie Glasfasern als textile Verstärkungen für Membranen aus PA 6 und PA 6.6 beschreibt (US-A-4 340 479, EP-A-0 173 500 und EP-A-0 096 306). Es ist zwar in diesen bekannten Fällen möglich, die mechanische Festigkeit der Membranfilter zu erhöhen und ihrer Quellneigung entgegenzuwirken, dennoch werden einige wesentliche Eigenschaften der bekannten textilverstärkten Membranfilter beeinträchtigt. Beispielsweise wird dann, wenn ein Polyolefinmaterial, beispielsweise ein Polypropylen-Vlies, in eine hydrophile Membranfiltermatrix eingebettet wird, die für viele Zwecke erwünschte hohe Verarbeitungstemperatur verringert. Textile Verstärkungsmaterialien aus Polyestern sind bei hohen pH-Werten und/oder hohen Temperaturen nicht hydrolysebeständig, so daß auf diese Weise verstärkte Membranfilter, beispielsweise aus Polyamiden, nicht in alkalischen Medien eingesetzt werden können. Darüber hinaus sind Polyesterverstärkungen gegenüber einer Reihe von Lösungsmitteln nicht beständig, was zur Folge hat, daß gewisse Mengen der aufgelösten Polyester in die mit dem Membranfiltern zu filtrierenden Medien gelangen, was insbesondere auf dem Nahrungsmittel- und Pharmaziesektor erhebliche Probleme aufwirft.

Aus Polyolefinen, insbesondere Polyethylen oder auch Polypropylen, bestehende textile Verstärkungen haben den Nachteil, daß sie nicht besonders temperaturbeständig sind, so daß dann, wenn sie beispielsweise in eine Polyamidmembranfiltermatrix eingebettet werden, deren günstige Temperaturbeständigkeit reduziert wird.

Aus EP-A-0 077 691 sind Umkehrosmosemembranen bekannt, bei denen ein aromatisches Polyamid als Membranmaterial verwendet wird, welches durch einen porösen Träger verstärkt wird, der u.a. ein Polyamidgewebe sein kann.

Aus GB-A-912 278 sind elektrisch leitende, gasimpermeable, semipermeable Membranen, d.h. Diffusionsmembranen, bekannt, die durch Imprägnieren eines blattförmigen Materials aus wasserunlöslichen synthetischen Harzfasern mit einer Lösung eines Polyamidharzes in einem wasserlöslichen Lösungsmittel und anschließendes Auswaschen des Lösungsmittels mit Wasser hergestellt werden. Das Polyamidharz zur Membranbildung ist vorzugsweise ein niedermolekulares Nylon.

Die Erfindung hat sich die Aufgabe gestellt, textilverstärkte Membranfilter zu schaffen, denen nicht mehr die vorstehend geschilderten Nachteile der bekannten textilverstärkten Membranfilter anhaften.

Diese Aufgabe wird durch die textilverstärkten Membranfilter des Patentanspruchs 1 gelöst.

Die Erfindung beruht auf der Feststellung, daß dann, wenn die zur Herstellung der textilen Verstärkungsmaterialien (z.B. Gewebe) und der Membranfilter eingesetzten Polymeren aliphatische Polyamide sind, textilverstärkte Membranfilter mit sowohl homogenen physikalischen als auch homogenen chemischen Eigenschaften erhalten werden können. Diese Vorteile treten dann besonders deutlich hervor, wenn es sich bei den zur Herstellung der Membranfilter sowie der textilen Verstärkungen eingesetzten Materialien um chemisch identische aliphatische Polyamide handelt.

Besonders bevorzugte erfindungsgemäße textilverstärkte Membranfilter sind solche, bei denen sowohl die Textilverstärkung als auch die Membranfiltermatrix aus den aliphatischen Polyamiden PA 6,6 und PA 6 bestehen.

Wie bereits erwähnt, sind textilverstärkte Membranfilter, bei denen die textile Verstärkung und die Membranfiltermatrix aus aliphatischen Polyamiden, wie PA 6.6 und PA 6 bestehen, besonders vorteilhaft.

Diese Membranen besitzen im Gegensatz zu mit Polyestervlies bzw. Polyestergewebe verstärkten Membranfiltern eine außerordentlich hohe Alkalibeständigkeit, wobei ferner nicht die Gefahr besteht, daß durch organische Lösungsmittel Anteile der Polyesterverstärkung herausgelöst werden. Ferner besitzen sie gegenüber von mit Polyolefinen verstärkten Membranfiltern den Vorteil einer außerordentlich guten Temperaturbeständigkeit.

Vorzugsweise bestehen die in den erfindungsgemäßen Membranfiltern eingesetzten textilen Verstärkungen aus Geweben und Gewirken, bei denen es sich je nach der Dicke der mit ihnen verstärkten Membranen und dem Titer der zu ihrer Herstellung eingesetzten Fäden bzw. Garne um mono- oder multifile Gewebe oder Gewirke handeln kann. Gegebenenfalls können auch perforierte Folien als Verstärkungsmaterialien in den erfindungsgemäßen Membranfiltern eingesetzt werden. Die eingesetzten Gewebe und Gewirke bzw. eventuell verwendete perforierte Folien müssen solche Maschenöffnungen bzw. Perforationen aufweisen, daß die Filtrationseigenschaften der Membranfilter und die Durchflußmengen nicht wesentlich beeinflußt werden.

Vorzugsweise ist die textile Verstärkung vollständig in dem Membranfiltermaterial eingebettet und mit diesem verbunden, es sind jedoch auch Membranfilter möglich, bei denen das textile Verstärkungsmaterial auf einer oder gegebenenfalls beiden Seiten des Membranfilters teilweise freiliegt, jedoch noch in ausreichendem Maße mit dem Membranfiltermaterial verbunden ist.

Zur Erzielung einer guten Verbindung mit dem Membranfiltermaterial sollte der Fadendurchmesser des verstärkenden Textils zwischen 25 und 80 µm betragen.

Zur Herstellung der erfindungsgemäßen Membranfilter kann man auf übliche vorzugsweise kontinuierlich arbeitende Verfahren zurückgreifen, bei deren Durchführung das Membranfilterpolymere, beispielsweise PA 6,6, in einem Lösungsmittel oder Lösungsmittelgemisch, im Falle von PA 6,6 beispielsweise einen Gemisch aus Ameisensäure und Wasser als Lösungsmittel aufgelöst wird, die erhaltene Gießlosung in Form eines Films auf eine Unterlage, beispielsweise eine sich drehende Walze, aufgebracht und in ein Fällbad eingeleitet wird, in welchem aus dem Gießlösungsfilm das Membranfilter ausgefällt wird. Das Fällbad besteht in zweckmäßiger Weise aus demselben Lösungsmittel und Nichtlösungsmittel wie die Gießlösung, wobei jedoch die Menge des Nichtlösungsmittels größer ist als in der Gießlösung.

Die bekannten Membranfilterherstellungsverfahren werden erfindungsgemäß in der Weise modifiziert, daß nach der Erzeugung des Gießlösungsfilms in diesen bzw. auf diesen das textile Verstärkungsmaterial eingebracht bzw. aufgebracht und beim Ausfällen im Fällbad mit dem gebildeten Membranfilter verbunden wird.

Im Gegensatz zu den bekannten Verfahren zur Einbettung von solchen textilen Verstärkungsmaterialien, sind erfindungsgemäß beim Einbetten der textilen Verstärkungen in den Gießlösungsfilm bzw. beim Aufbringen auf denselben bestimmte Maßnahmen einzuhalten.

Nachdem nämlich erfindungsgemäß das textile Verstärkungsmaterial und das Membranfiltermaterial aus aliphatischen Polyamiden, insbesondere aus chemisch identischen aliphatischen Polyamiden bestehen und somit im gleichen Lösungsmittel bzw. Lösungsmittelsystem löslich sind, kann beim Kontaktieren des Verstärkungsmaterials mit dem Gießlösungsfilm ein Anlösen des Verstärkungsmaterials und damit eine Veränderung der Zusammensetzung der das Verstärkungsmaterial umgebenden Gießlösung erfolgen und in einem veränderten Verfestigungsverhalten (Entmischungsverhalten) bei der Membranbildung resultieren. Dem oberflächlichen Anlösen des textilen Verstärkungsmaterials geht ein kontinuierliches Quellen, verbunden mit einer Volumenvergrösserung, beispielsweise der Fäden und Garne eingesetzter Gewebe oder Gewirke, voraus. Durch das bis zur Verfestigung im Fällbad andauernde Quellen des textilen Verstärkungsmaterials erfolgt ein fortgesetztes Schrumpfen der von dem Gießlösungsfilm benetzten verstärkenden Textilbahn, insbesondere wenn diese aus Geweben oder Gewirken besteht, da die Fäden bzw. Fasern dieser Gewebe und Gewirke außen quellen, während der Kern zunächst unverändert bleibt, so daß der Faden bzw. das Garn nicht länger wird. Dies bedingt eine Migration einzelner oberflächlich gequollener und möglicherweise bereits angelöster Fäden bzw. Garne in horizontaler Richtung zur Mitte der Verstärkungsmaterialbahn hin, d.h. ein axialer Schrumpf, und führt ebenfalls zu einer Erhöhung der Fadenspannung in Bahnlängsrichtung, was im Falle einer Einbettung in einem vorbeschichteten Gießlösungsfilm an Stellen, an denen der Gießlösungsfilm mit darin eingebettetem textilen Verstärkungsmaterial auf einem als Gießunterlage verwendeten Endlosband oder einer Trommel umgelenkt wird, zu einer Bewegung invertikaler Richtung (radial) in Richtung der Gießunterlage führt. Entsprechend dieser axialen und ggf. radialen Bewegungskomponenten orientiert sich ein möglicherweise von der textilen Verstärkung abgelöstes Material als Fadenschleppe. Im Fällbad entmischt sich das gelöste membranbildende Material zu einer mikroporösen Matrix, während sich die Fadenschleppe zu einem undurchlässigen Film innerhalb der Filtermatrix verfestigt, was eine reduzierte Durchflußleistung der verstärkten Membranfilter zur Folge hat.

Erfindungsgemäß wird die Bildung der Fadenschleppen dadurch vermieden, daß die Zeitspannen zwischen dem ersten Kontakt des Gießlösungsfilms mit der textilen Verstärkung und dem ersten Kontakt des das textile Verstärkungsmaterial eingebettet enthaltenden Gießlösungsfilms mit dem Fällbad, d.h. die Verweilzeit, auf einem Wert zwischen 0,1 und 15 Sekunden und insbesondere auf einem Wert zwischen 0,5 und 7 Sekunden gehalten wird. Die Verweilzeit innerhalb des angegebenen Bereichs von 0,1 und 15 Sekunden richtet sich nach dem jeweiligen Material für die textile Verstärkung, dem für die Gießlösung verwendeten Lösungsmittel bzw. Lösungsmittelsystem, der Temperatur sowie der Konzentration der Gießlösung an dem aufgelösten Membranfiltermaterial und auch nach der Temperatur und Zusammensetzung des Fällbades und läßt sich durch einfache Vorversuche optimieren.

Je kürzer die Verweilzeit ist, desto geringer ist die Wahrscheinlichkeit der Bildung von Fadenschleppen, durch welche die Durchflußleistung verringert wird (vgl. das weiter unten folgende Beispiel 1). Das Auftreten dieser Fadenschleppen läßt sich sowohl anhand einer verringerten Durchflußleistung als auch durch elektronenmikroskopische Aufnahmen feststellen.

Die Ausfällung des Membranfiltermaterials aus dem das textile Verstärkungsmaterial enthaltenden Gießlösungsfilm erfolgt bei Kontakt mit dem Fällbad nicht spontan. Vielmehr wird durch diffusiven Austausch von Lösungsmittel im Gießlösungsfilm durch Fällmittel aus dem Fällbad die Solvatationstärke des Lösungsmittelsystems im Gießlösungsfilm solange herabgesetzt, bis der Fällpunkt (Verfestigung) erreicht ist. Die Geschwindigkeit, mit welcher der Fällpunkt erreicht wird (Fällgeschwindigkeit) läßt sich durch den Feststoffgehalt der Lösung sowie den Gehalt des Lösungsmittelsystems der Gießlösung an Nichtlösungsmittel beeinflussen. Im allgemeinen wird die Fällzeit mit steigendem Feststoffgehalt sowie steigendem Gehalt an Nichtlösungsmittel in der Gießlösung verkürzt. In dem Maße, in dem sich die Fällgeschwindigkeit erhöhen läßt, verringert sich die Quell- und Lösezeit für das textile Verstärkungsmaterial, was sich durch Steigerung der Durchflußleistung der erhaltenen textilverstärkten Membranfilter bemerkbar macht (vgl. die Beispiele 2 a-c).

Vorzugsweise wird die Einbettung der textilen Verstärkung in dem Gießlösungsfilm in der Weise durchgeführt, daß ein Gießlösungsfilm auf eine Unterlage, beispielsweise eine sich drehende Trommel oder ein Endlosband, einer kontinuierlich arbeitenden Membranfilterherstellungsvorrichtung aufgebracht wird, das textile Verstärkungsmaterial auf dem Gießlösungsfilm aufgelegt und eine weitere Schicht aus einem Gießlösungsfilm aufgebracht wird. Auf diese Weise wird die textile Verstärkung vollständig in dem Gießlösungsfilm eingebettet.

Es ist auch möglich, die textile Verstärkung auf einen sich auf einer Unterlage befindlichen Gießlösungsfilm aufzulegen, wobei er von der Gießlösung durchdrungen und auf diese Weise in dem Gießlösungsfilm eingebettet wird.

Man kann auch umgekehrt verfahren, indem man einen Gießlösungsfilm auf eine textile Verstärkung, die sich auf einer Unterlage befindet, aufbringt.

Die erfindungsgemäßen textilverstärkten Membranfilter besitzen im allgemeinen, insbesondere in Abhängigkeit von dem verwendeten textilen Verstärkungsmaterial, Dicken zwischen60 µm und 200 µm und können für verschiedene Zwecke verwendet werden, insbesondere als Bahnware zum Einbau in Filterkerzen und Wickelmodule sowie als Flachfilter zum Einbau in Gehäuse bzw. Module für die statische und die Querstromfiltration.

Die folgenden Beispiele erläutern die Erfindung:

### Beispiel 1

In einem Rührbehälter werden bei Raumtemperatur 73 kg Ameisensäure (techn., 98-100%ig) und 8 kg entionisiertes Wasser 5 Minuten vermischt, dann 19 kg PA 6.6-Granulat (Du Pont, Zytel 42) zugegeben und unter schnellem Rühren gelöst. Während der Lösezeit des PA 6.6-Granulates soll die Lösungstemperatur auf 35°C steigen und wird dann während zwei Stunden konstant gehalten. Bei reduzierter Rührerdrehzahl wird die klare Gießlösung dann unter mäßigem Rühren auf 10°C gekühlt.

Auf eine zu 70% in ein Ameisensäure und Wasser etwa im Verhältnis 1:1 enthaltendes auf 7°C gekühltes Fällbad eintauchende rotierende Walze wird ein 100 µm dicker Gießlösungsfilm aufgetragen. Unmittelbar vor einem zweiten Auftragswerk wird eine Bahn eines PA 6.6-Gewebes (NY 136 HC, Monofil, Fadendicke 47 µm, Züricher Beuteltuch Fabrik, CH) durch Auflegen in den Gießlösungsfilm eingebettet und im nachfolgenden Auftragswerk mit einer weiteren Gießlösungsschiebt bedeckt. Der Zeitraum zwischen Einbettung des Gewebes und Eintritt des so benetzten PA 6.6-Gewebes in das Fällbad (Verweilzeit τ) wird durch Veränderung der Umdrehungsgeschwindigkeit der Trommel variiert.

Der Einfluß der Verweilzeit τ auf die bei 20°C mit Wasser gemessene Durchflußleistung der verfestigten polyamidverstärkten Polyamidmembranen ist Tab. 1 zu entnehmen.

| Verweilzeit τ (sec) | Durchflußleistung (ml/cm2 bar min) |
|---|---|
| 14 | 5,3 |
| 10 | 6,5 |
| 7 | 8,6 |
| 5 | 10,7 |
| unverstärktes Filter | 11,5 |

Die in Tab. 1 gezeigten Ergebnisse zeigen, daß sich durch Verringerung der Verweilzeit τ eine Verbesserung der Filtratleistung der nylonverstärkten Nylonmembrane erzielen läßt.

### Beispiel 2

a) In einem thermostatisierten Rührbehälter werden 73,5 kg Ameisensäure (techn., 98-100%ig) und 7,5 kg entionisiertes Wasser unter Rühren auf 30°C temperiert, dann 19 kg PA 6.6-Granulat (Du Pont, Zytel 42) zugegeben und während 4 Stunden bei 30°C unter Rühren gelöst. Die klare Gießlösung wird dann unter mäßigem Rühren auf 10°C gekühlt.
   Wie in Beispiel 1 beschrieben wird eine Bahn aus PA 6.6-Gewebe kontinuierlich in einen auf eine rotierende Trommel aufgetragenen Gießlösungsfilm eingebettet und nachbeschichtet. Die Verweilzeit τ (Zeitraum zwischen Einbetten des Gewebes und Eintritt in das Fällbad) beträgt 4,2 Sekunden.
b) Wie in Beispiel 2a) beschrieben wird eine Gießlösung aus 74 kg Ameisensäure, 10 kg entionisiertem Wasser und 16 kg PA 6.6-Granulat bei 30°C hergestellt. Die Herstellung des PA 6.6-verstärkten PA 6.6-Membranfilters erfolgt wie in Beispiel 2a) beschrieben.
c) Wie in Beispiel 2a) beschrieben wird eine Gießlösung aus 71,8 kg Ameisensäure, 11,2 kg entionisiertem Wasser und 17 kg PA 6.6-Granulat bei 40°C hergestellt. Die Einbettung des PA 6.6 Gewebes in die gekühlte PA 6.6-Gießlösung erfolgt wie in Beispiel 2a) beschrieben.

| Fällmittelgehalt d.Gießlösung (%) | PA 6.6-verstärktes PA 6.6-Membranfilter | | |
|---|---|---|---|
| | Dicke (µm) | Bubble-Point (bar) | Durchfluß (ml/cm2·bar·min) |
| 7,5 | 190-200 | 4,8 | 5,1-4,8 |
| 10 | 170-180 | 5,1-5,3 | 6,2-5,8 |
| 11,2 | 135-180 | 4,3-4,5 | 10,8-8,7 |

Die Messungen an den aus Beispiel 2a-c erhaltenen textilverstärkten Filtern zeigen, daß bei konstanter Verweilzeit τ durch Erhöhung des Fällmittelanteiles in der Gießlösung eine Verbesserung der Filtratleistung erreicht werden kann.

## Patentansprüche

1. Textilverstärktes Membranfilter, wobei das Membranmaterial und das textile Verstärkungsmaterial aus aliphatischen Polyamiden bestehen und das textilverstärkte Membranfilter erhältlich ist durch Einbetten der textilen Verstärkung in einen Film aus einer Lösung des Membranfiltermaterials (Gießlösungsfilm) und Ausfällen des Membranfiltermaterials in einem Fällbad, wobei die Zeitspanne zwischen dem ersten Kontakt des Gießlösungsfilms mit der textilen Verstärkung und dem ersten Kontakt des das textile Verstärkungsmaterial eingebettet enthaltenden Gießlösungsfilms mit dem Fällbad (Verweilzeit) auf einen Wert zwischen 0,1 und 15 Sekunden, insbesondere 0,5 und 7 Sekunden, gehalten wird.

2. Textilverstärktes Membranfilter nach Anspruch 1, dadurch gekennzeichnet, daß das Membranfilter und die textile Verstärkung aus chemisch identischen aliphatischen Polyamiden bestehen.

3. Textilverstärktes Membranfilter nach den Ansprüchen 1 und 2, dadurch gekennzeichnet, daß die aliphatischen Polyamide aus einem Polykondensationsprodukt aus Adipinsäure und Hexamethylendiamin (PA 6.6), oder aus Poly-ε-caprolactam (PA 6) bestehen.

4. Textilverstärktes Membranfilter nach den Ansprüchen 1 bis 3, dadurch gekennzeichnet, daß die textile Verstärkung aus einem Gewebe oder Gewirke besteht.

5. Textilverstärktes Membranfilter nach Anspruch 4, dadurch gekennzeichnet, daß der Fadendurchmesser einer aus einem Gewebe oder Gewirke bestehenden textilen Verstärkung zwischen 25 und 80 µm liegt.

6. Textilverstärktes Membranfilter nach den Ansprüchen 1 bis 5, dadurch gekennzeichnet, daß das textile Verstärkungsmaterial teilweise oder vollständig in das Membranfiltermaterial eingebettet ist.

7. Verfahren zur Herstellung eines textilverstärkten Membranfilters gemäß den Ansprüchen 1 bis 6 bei dem die textile Verstärkung in einen Film aus einer Lösung des Membranfiltermaterials (Gießlösungsfilm) eingebettet und das Membranfiltermaterial in einem Fällbad ausgefällt wird, wobei die Zeitspanne zwischen dem ersten Kontakt des Gießlösungsfilms mit der textilen Verstärkung und dem ersten Kontakt des das textile Verstärkungsmaterial eingebettet enthaltenden Gießlösungsfilms mit dem Fällbad (Verweilzeit) auf einem Wert zwischen 0,1 und 15 Sekunden, insbesondere 0,5 und 7 Sekunden, gehalten wird.

8. Verfahren nach Anspruch 7, dadurch gekennzeichnet, daß zur Einbettung der textilen Verstärkung in dem Gießlösungsfilm ein Gießlösungsfilm auf eine Unterlage aufgebracht wird, die textile Verstärkung in den Gießlösungsfilm eingebracht und ein weiterer Gießlösungsfilm aufgetragen wird.

9. Verfahren nach Anspruch 7, dadurch gekennzeichnet, daß die textile Verstärkung in einen Gießlösungsfilm auf einer Unterlage eingebracht wird.

10. Verfahren nach Anspruch 7, dadurch gekennzeichnet, daß ein Gießlösungsfilm auf eine textile Verstärkung auf einer Unterlage aufgebracht wird.

11. Verfahren nach den Ansprüchen 7 bis 10, dadurch gekennzeichnet, daß das verwendete Membranmaterial und das textile Verstärkungsmaterial aus chemisch identischen aliphatischen Polyamiden bestehen.

12. Verfahren nach den Ansprüchen 7 bis 11, dadurch gekennzeichnet, daß das verwendete Membranfiltermaterial und das textile Verstärkungsmaterial aus dem Polykondensationsprodukt aus Adipinsäure und Hexamethylendiamin (PA 6.6) oder aus Poly-ε-caprolactam (PA 6) bestehen.

13. Verfahren nach den Ansprüchen 7 bis 12, dadurch gekennzeichnet, daß die Einbettung des textilen Verstärkungsmaterials in die Gießlösung kontinuierlich als Zusatzstufe zu einem kontinuierlich arbeitenden Membranherstellungsverfahren durchgeführt wird.

14. Verwendung eines textilverstärkten Membranfilters gemäß den Ansprüchen 1 bis 6 als Bahnware zum Einbau in Filterkerzen und Wickelmodule sowie als Flachfilter zum Einbau in Gehäuse bzw. Module für die statische Filtration und die Querstromfiltration.

## Claims

1. Textile-reinforced membrane filter, wherein the membrane material and the textile reinforcing material consist of aliphatic polyamides and the textile-reinforced membrane filter is obtainable by embedding of the textile reinforcement in a film of a solution of the membrane filter material (casting solution film) and precipitation of the membrane filter material in a precipitation bath, wherein the time span between the first contact of the casting solution film with the textile reinforcement and the first contact of the casting solution film, which contains the textile reinforcing material embedded, with the precipitation bath (dwell time) is kept to a value between 0.1 and 15 seconds, in particular 0.5 and 7 seconds.

2. Textile-reinforced membrane filter according to claim 1, characterised thereby, that the membrane filter and the textile reinforcement consist of chemically identical aliphatic polyamides.

3. Textile-reinforced membrane filter according to the claims 1 and 2, characterised thereby, that the polyphatic polyamides consist of a polycondensation product of adipic acid and hexamethylene diamine (PA 6.6) or of poly-ε-caprolactam (PA 6).

4. Textile-reinforced membrane filter according to the claims 1 to 3, characterised thereby, that the textile reinforcement consists of a woven or knitted fabric.

5. Textile-reinforced membrane filter according to claim 4, characterised thereby, that the thread diameter of the textile reinforcement consisting of a woven or knitted fabric lies between 25 and 80 micrometres.

6. Textile-reinforced membrane filter according to the claims 1 to 5, characterised thereby, that the textile reinforcing material is embedded partially or entirely into the membrane filter material.

7. Method for the production of a textile-reinforced membrane filter according to the claims 1 to 6, in which the textile reinforcement is embedded in a film of a solution of the membrane filter material (casting solution film) and the membrane filter material is precipitated in a precipitation bath, wherein the time span between the first contact of the casting solution film with the textile reinforcement and the first contact of the casting solution film, which contains the textile reinforcing material embedded, with the precipitation bath (dwell time) is kept to a value between 0.1 and 15 seconds, in particular 0.5 and 7 seconds.

8. Method according to claim 7, characterised thereby, that for the embedding of the textile reinforcement in the casting solution film, a casting solution film is applied onto a foundation, the textile reinforcement is introduced into the casting solution film and a further casting solution film is applied.

9. Method according to claim 7, characterised thereby, that the textile reinforcement is introduced into a casting solution film on a foundation.

10. Method according to claim 7, characterised thereby, that a casting solution film is applied onto the textile reinforcement on a foundation.

11. Method according to the claims 7 to 10, characterised thereby, that the membrane material used and the textile reinforcement consist of chemically identical aliphatic polyamides.

12. Method according to the claims 7 to 11, characterised thereby, that the membrane filter material used and the textile reinforcement consist of the polycondensation product of adipic acid and hexamethylene diamine (PA 6.6) or of poly-ε-caprolactam (PA 6).

13. Method according to the claims 7 to 12, characterised thereby, that the embedding of the textile reinforcing material into the casting solution is performed continuously as a stage addition to a continuously operating membrane-manufacturing process.

14. Use of a textile-reinforced membrane filter according to the claims 1 to 6 as web ware for incorporation in filter cartridges and wound modules as well as flat filter for incorporation in housings or modules for the static filtration and for the cross-current filtration.

## Revendications

1. Membrane filtrante renforcée avec une matière textile, le matériau de la membrane et la matière textile de renfort étant formés de polyamides aliphatiques, et la membrane filtrante renforcée avec une matière textile pouvant être obtenue par incorporation du renfort textile dans un film formé à partir d'une solution du matériau de la membrane filtrante (film coulé en solution) et précipitation du matériau de la membrane filtrante dans un bain de précipitation, le temps écoulé entre le premier contact entre le film coulé en solution et le renfort textile et le premier contact entre le film coulé en solution contenant la matière textile de renfort incorporée dans celui-ci et le bain de précipitation (temps de séjour) étant maintenu à une valeur comprise entre 0,1 et 15 secondes, en particulier entre 0,5 et 7 secondes.

2. Membrane filtrante renforcée avec une matière textile selon la revendication 1, caractérisée en ce que la membrane filtrante et le renfort textile sont formés de polyamides aliphatiques identiques.

3. Membrane filtrante renforcée avec une matière textile selon les revendications 1 et 2, caractérisée en ce que les polyamides aliphatiques sont formés d'un produit de polycondensation d'acide adipique et d'hexaméthylènediamine (PA 6,6) ou de poly-ε-caprolactame (PA 6).

4. Membrane filtrante renforcée avec une matière textile selon les revendications 1 à 3, caractérisée en ce que le renfort textile est formé d'un tissé ou d'un tissu à mailles.

5. Membrane filtrante renforcée avec une matière textile selon la revendication 4, caractérisée en ce que le diamètre des fils d'un renfort textile formé d'un tissé ou d'un tissu à mailles est compris entre 25 et 80 µm.

6. Membrane filtrante renforcée avec une matière textile selon les revendications 1 à 5, caractérisée en ce que la matière textile de renfort est incorporée entièrement ou partiellement dans le matériau de la membrane filtrante.

7. Procédé de fabrication d'une membrane filtrante renforcée avec une matière textile selon les revendications 1 à 6, dans lequel le renfort textile est incorporé dans un film formé à partir d'une solution du matériau de la membrane filtrante (film coulé en solution), et le matériau de la membrane filtrante est précipité dans un bain de précipitation, le temps écoulé entre le premier contact entre le film coulé en solution et le renfort textile et le premier contact entre le film coulé en solution contenant la matière textile de renfort incorporée dans celui-ci et le bain de précipitation (temps de séjour) étant maintenu à une valeur comprise entre 0,1 et 15 secondes, en particulier entre 0,5 et 7 secondes.

8. Procédé selon la revendication 7, caractérisé en ce que, pour incorporer le renfort textile dans le film coulé en solution, on applique un film coulé en solution sur un substrat, on introduit le renfort textile dans le film coulé en solution et on applique un autre film coulé en solution.

9. Procédé selon la revendication 7, caractérisé en ce qu'on introduit le renfort textile dans un film coulé en solution sur un substrat.

10. Procédé selon la revendication 7, caractérisé en ce qu'on applique un film coulé en solution sur un renfort textile disposé sur un substrat.

11. Procédé selon les revendications 7 à 10, caractérisé en ce que le matériau de membrane utilisé et la matière textile de renfort sont formes de polyamides aliphatiques chimiquement identiques.

12. Procédé selon les revendications 7 à 11, caractérisé en ce que le matériau utilisé pour la membrane filtrante et la matière textile de renfort sont formés du produit de polycondensation d'acide adipique et d'hexaméthylènediamine (PA 6,6) ou de poly-ε-caprolactame (PA 6).

13. Procédé selon les revendications 7 à 12, caractérisé en ce qu'on effectue l'incorporation de la matière textile de renfort dans la solution à couler de manière continue, comme étape supplémentaire d'un procédé de fabrication de membrane fonctionnant en continu.

14. Utilisation d une membrane filtrante renforcée avec une matière textile selon les revendications 1 à 6 sous la forme d'un matériau en bande à incorporer dans des filtres en forme de bougie et des modules d'enroulement, ainsi que sous la forme de filtres plats à incorporer dans un bâti ou des modules pour la filtration statique et la filtration à courant transversal.
